# EUROPEAN PATENT APPLICATION

(11) **EP 1 701 490 A1**
(43) Date of publication of application: **13.09.2006**
(21) Application number: 06004844.4
(22) Date of filing: 09.03.2006
(51) Int. Cl.: H04L 12/56

(54) **System and method for relaying signal in a communication system**

(30) Priority: 09.03.2005 KR 2005019855
(71) Applicant: Samsung Electronics Co., Ltd., Suwon-si, Gyeonggi-Do (KR)
(72) Inventor: Cho, Jae-Weon c/o Samsung Electronics Co., Ltd., Suwon-si, Gyeonggi-do (KR); Koo, Chang-Hoi c/o Samsung Electronics Co., Ltd., Suwon-si, Gyeonggi-do (KR); Joo, Pan-Yuh c/o Samsung Electronics Co., Ltd., Suwon-si Gyeonggi-do (KR); Son, Jung-Je c/o Samsung Electronics Co., Ltd., Suwon-si, Gyeonggi-do (KR); Son, Yeong-Moon c/o Samsung Electronics Co., Ltd., Suwon-si, Gyeonggi-do (KR); Kang, Hyun-Jeong c/o Samsung Electronics Co., Ltd., Suwon-si, Gyeonggi-do (KR); Lee, Sung-Jin c/o Samsung Electronics Co., Ltd., Suwon-si, Gyeonggi-do (KR); Lim, Hyoung-Kyu c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a signal relaying method and system in a communication system including an mobile subscriber station (MSS), a base station (BS), a first relay station located between the MSS and the BS, a second relay station between the MSS and the BS. In the system, the first relay station or second relay station relays signals between the BS and the MSS if the MSS is within the cell coverage of the BS, and the first second relay station relays signals between the BS and the MSS if the MSS is out of the cell coverage of the BS.

## Description

### BACKGROUND OF THE INVENTION

### 1. Field of the Invention

The present invention relates generally to a communication system, and in particular, to a system and method for relaying signals in a communication system using a relay scheme.

### 2. Description of the Related Art

Provisioning of high-speed, large-capacity services with various Quality of Service (QoS) levels to users is an active research area for the future-generation (i.e., the 4^{th} Generation (4G) mobile communication system). A challenge faced by the 4G mobile communication system is to provide self configurable wireless networking. The self-configurable wireless networking is provided by a formation of a wireless network autonomously configurable and in a distributed fashion without control of a central control system, for providing mobile communication services.

The self-configurable wireless networking is very significant to the 4G mobile communication system because it is very difficult to efficiently apply conventional centralized wireless networking in a highly varying wireless network environment. For the purposes of supporting high data rates and accommodating a great number of calls, the 4G mobile communication system requires cells with very small radius. However, conventional wireless networking can cause the 4G mobile communication system to be centralized, which makes it impossible to actively cope with changes in the wireless network environment. Therefore, a wireless network must operate by distributed control and must actively cope with an environmental change such as an addition of a new Base Station (BS). Thus the 4G mobile communication systems will rely upon self configurable wireless networking, to provide desired services to users.

For real implementation of a self-configurable wireless network, ad hoc network technology needs to be applied to a mobile communication system. An example of a self-configurable wireless network, is a multi-hop relay cellular mobile communication system realized by using multi-hop relaying of an ad hoc network to a cellular mobile communication system with fixed BSs.

In general, since communications are conducted between a BS and a Mobile Subscriber Station (MSS) via a single direct link in the cellular mobile communication system, a highly reliable radio communication link can be easily established between them. BSs are fixed in the multi-hop relay cellular mobile communication system. Due to the resulting low flexibility in wireless networking, it is very difficult to provide services efficiently under a wireless environment experiencing great changes in traffic distribution or required calls.

To overcome this shortcoming, a relay scheme is adopted for the multi-hop cellular mobile communication system, in which data is transmitted over multiple hops via a plurality of adjacent MSSs or Fixed Relay Stations (FRSs). Consequently, a wireless network is actively reconfigurable according to wireless environment changes, and the whole wireless network can be operated efficiently. In this way, the self-configurable wireless network can be built over the multi-hop relay cellular mobile communication system.

However, multi-hop relay cellular mobile communication systems have been modeled simply in concept and thus a specific model that allows for implementation of a self-configurable wireless network is yet to be developed. Accordingly, a need exists for developing a specific model over which a self-configurable wireless network required for the 4G mobile communication system can be realized.

### SUMMARY OF THE INVENTION

An object of the present invention is to substantially solve at least the above problems and/or disadvantages and to provide at least the advantages below. Accordingly, the present invention provides a system and method for relaying signals in a communication system.

The present invention also provides a system and method for efficiently relaying signals by use of Relay Stations (RSs) with differentiated relaying functions in a communication system.

According to one aspect of the present invention, a signal relaying system in a communication system includes a mobile subscriber station (MSS), a base station (BS), a first relay stationbetween the MSS and the BS, for relaying a signal between the MSS and the BS, and a second relay station between the MSS and the BS, for relaying a signal between the MSS and the BS. If the MSS is within the cell coverage of the BS, the first relay station or second relay station relays signals between the BS and the MSS, and if the MSS is out of the cell coverage of the BS, the first relay station relays signals between the BS and the MSS.

According to another aspect of the present invention, in a signal relaying method in a communication system including an MSS, a BS, a first relay stationbetween the MSS and the BS, for relaying a signal, and a second relay station between the MSS and the BS, for relaying a signal, the method including controlling the first relay station and/or second relay station to relay signals between the BS and the MSS if the MSS is within the cell coverage of the BS, and controlling the first relay stationto relay signals between the BS and the MSS if the MSS is out of the cell coverage of the BS.

### BRIEF DESCRIPTION OF THE DRAWINGS

The above and other objects, features and advantages of the present invention will become more apparent from the following detailed description when taken in conjunction with the accompanying drawings in which:
FIG 1 is a block diagram illustrating a signal flow for a cell coverage expanding operation by a 2-hop relay in a multi-hop relay cellular communication system according to the present invention;
FIG 2 is a block diagram illustrating a signal flow for a system capacity increasing operation by the 2-hop relay in the multi-hop relay cellular communication system according to the present invention;
FIG 3 is a block diagram illustrating a signal flow for a cell coverage expanding operation by a multi-hop relay in the multi-hop relay cellular communication system according to the present invention;
FIG 4 is a block diagram illustrating a signal flow for a system capacity increasing operation by the multi-hop relay through use of FRSs or MRSs in the multi-hop relay cellular communication system according to the present invention; and
FIG 5 is a block diagram illustrating a signal flow for an operation for increasing cell coverage and system capacity the 2-hop relay through use of FRSs and MRSs in the multi-hop relay cellular communication system according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention is intended to provide a system and method for relaying signals by differentiating the relay functions of RSs according to their mobility in a communication system. For example, in a multi-hop relay cellular mobile communication system including BSs, MSSs, and RSs, a system and method for relaying signals through use of FRSs or MRSs whose relay functions are differentiated according to their mobility are provided.

A description will be made of the multi-hop relay cellular mobile communication system of the present invention.

The elements of the multi-hop cellular mobile communication system are largely divided into BSs, MSSs, FRSs, and MRSs.

### (1) BS

A BS is located fixed at a predetermined position (generally at the center of a cell area) in a cell. The BS functions similarly to a BS in a typical cellular mobile communication system. Specifically, the BS controls the operations of MSSs within the cell area and serves as a gateway connected to a wired network. Yet, while the BS provides communications to MSSs via direct links in the typical cellular mobile communication system, it can communicate with the MSSs in relay paths by use of RSs like FRSs and MRSs as well as via the direct links in the multi-hop relay cellular mobile communication system. The BS also controls the operations of the FRSs and MRSs.

### (2) FRS

An FRS is installed at a fixed position by an operator of the multi-hop relay cellular mobile communication system. A fixed subscriber terminal at a predetermined position may serve as an FRS. A typical analog relay station (RS) such as a radio frequency (RF) RS or an optical RS relays all signals received from a BS simply by amplifying them. In contrast, the FRS selects only signals to be relayed among the received signals and relay the selected signals. The selection can be made under the control of the BS. Correspondingly, the FRS selects and relays particular signals among the received signals under the control of the BS.

Because the analog RS simply amplifies the received signals, prior to relaying, it is provided with only an RF module for signal reception, amplification and transmission. However, besides the RF module, the FRS has to include a baseband signal processing module, i.e., a physical layer processing module and (Medium Access Control) MAC-layer and higher-layer packet processing module.

A Power Amplifier (PA) power of the FRS is generally less than or equal to that of the BS and higher than a PA power of the MSS. The FRS may be provided with a directional antenna as well as an omni-directional antenna.

The FRS relays signals from MSSs both within, and out of, the BSs cell coverage. To allow an MSS outside the cell BSs coverage to initially access the BS, that is, enter the network via the FRS, the FRS must provide required functions for the initial access of the MSS. That is, the FRS relays a broadcast uni-directional control channel or traffic channel signal to the MSS, and relays a random access channel signal transmitted for the initial access from the MSS to the BS.

In addition, the FRS relays a dedicated channel signal to an MSS within the BSs cell coverage.

### (3) MRS

An MRS is an MSS having a relay function among MSSs. The MRS can be identical to a general MSS and has PA power greater than or equal to the general MSS. The MRS is usually provided with an omni-directional antenna.

In a comparison between the MRS and the FRS, the FRS relays from a fixed position, whereas the MRS relays signals from other MSSs in a mobile or stationary state. Like the FRS, the MRS is provided with a baseband signal processing module (i.e., a physical channel processing module and a MAC-layer and higher-layer packet processing module), as well as an RF module. Compared to the FRS, the MRS is responsible for signal relaying for MSSs within cell coverage of a BS and thus there is no need for signal relaying for initial access, that is, network entry.

In the signal relaying for the MSSs within the cell coverage, the MRS deals with only dedicated channel signals. Consequently, the functionalities of the MRS are simple, relative to those of the FRS.

### (4) MSS

As stated earlier, part of MSSs can operate as RSs. Whether an MSS is to function as an RS is decided in a capability negotiation procedure at an initial access.

Compared to the typical cellular mobile communication system, the multi-hop relay cellular mobile communication system of the present invention advantageously expands the cell coverage of a BS and thus increases an overall system capacity by use of RSs like FRSs and MRSs. For these advantages, the following operation scenario for the FRS and the MRS is provided.

### (a) Cell Coverage Expansion

The FRS can carry out signal relaying that expands the cell coverage of the BS. The downlink cell coverage of the BS can be defined as the maximum area in which a broadcast control channel signal (or a unicast control channel or traffic channel signal) from the BS can be demodulated reliably. The channel that delivers the broadcast signal is a common channel and the channel that carries the unicast signal is a dedicated channel. The uplink cell coverage of the BS can be defined as the maximum area from which a random access channel signal (or a unicast control channel or traffic channel signal) of an MSS can be demodulated reliably by the BS. In other words, the cell coverage of the BS can be defined as the maximum area in which an uplink/downlink a low speed control channel signal can be demodulated.

The cell coverage of the BS can be expanded by use of an RS. The RS relays a control channel signal broadcasted from the BS to MSSs out of the cell coverage and random access channel signals for initial access from the MSSs to the BS. However, it is difficult to detect the existence of the MSSs out of the cell coverage in advance because the MSSs out of the cell coverage targeted by the signal relaying have not been registered to the multi-hop cellular mobile communication system. Therefore, the RS has to relay the broadcast control channel signal periodically.

The RS also continuously monitors the random access channel signals from the MSSs out of the cell coverage. This signal relaying is performed at the expense of power consumption, compared to relaying a dedicated channel signal from a particular MSS. In this context, it is preferred that the FRS takes charge of the signal relaying for the purpose of expanding the cell coverage of the BS, as assumed in the present invention.

### (b) Increase of System Capacity

Both the FRS and the MRS can contribute to the system capacity increase. Signal relaying for increasing system capacity targets MSSs within the cell coverage of the BS. Since the MSSs can transmit/receive a control channel signal to/from the MS via direct links, an RS does not need to relay a broadcast control channel signal from the BS or a random access channel signal from an MSS.

In the signal relaying seeking to increase system capacity, the FRS or the MRS relays a dedicated channel signal for a particular MSS. As the FRS or the MRS relays a dedicated channel signal other than a broadcast channel signal from the BS to an MSS within the coverage area, having a low Signal-to-Noise Ratio (SNR) on a direct link between the BS and the MSS, a high-speed data transmission path is provided to the MSS. Therefore, the valid data rate of the MSS is increased and as a result, system capacity is increased.

As described above, only the FRS is responsible for signal relaying for expanding the cell coverage of a BS and both the FRS and the MRS can perform signal relaying for increasing system capacity. In this way, the relay functions of the FRS and the MRS are differentiated due to the difference between their mobility.

Since the FRS is fixed, (i.e., the FRS is not provided with mobility), it can be provided with larger a power supply and/or unlimited power supply than an MRS, and power consumption is not a limiting factor for the FRS. Also, the FRS can be provided with a directional antenna and thus can increase a valid transmit power. On the other hand, the MRS generally uses an omni-directional antenna (which can be less efficient than directional antenna), and typically has a limited power supply. Thus, either periodically transmitting a broadcast control message or continuously monitoring a random access channel for the purpose of expanding the cell coverage, is not preferable for the MRS. Additionally, due to its fixed state, the FRS can solve problems in routing easily, relative to the MRS. Accordingly, signal relaying for cell coverage expansion is limited to the FRS, which is more efficient.

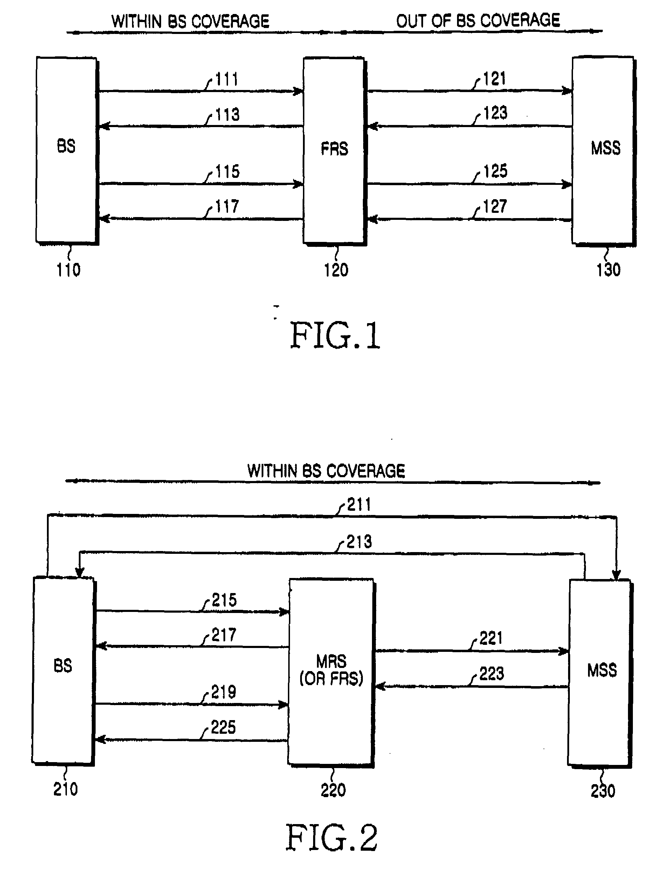

Cell coverage expansion in a 2-hop relay in a multi-hop cellular communication system according to an embodiment of the present invention will now be described with reference to FIG 1.

FIG 1 is a block diagram illustrating a cell coverage expansion using a 2-hop relay in a multi-hop cellular communication system according to the present invention.

Referring to FIG 1, the cell coverage of a BS 110 is expanded by signal relaying between the BS 110 and an MSS 130 via a single FRS 120, i.e., a 2-hop relay. The FRS 120 is located within the cell coverage of the BS 110 and the MSS 130 is out of the BS 110's cell coverage. The FRS 120 receives a downstream broadcast control channel or traffic channel signal from the BS in step 111 and relays the received signal to the MSS 130 in step 121. The downstream refers to a data transmission path from the BS 110 to an end MSS, i.e., the MSS 130. The channel which is broadcast is a common channel. The FRS 120 receives an upstream random access channel signal from the MSS 130 in step 123 and relays the received signal to the BS 110 in step 113. The upstream refers to a data transmission path from the end MSS 130 to the BS 110.

Meanwhile, the FRS 120 relays dedicated control channel or traffic channel signals between the BS 110 and the MSS 130. Specifically, the FRS 120 receives a downstream dedicated control channel or traffic channel signal from the BS 110 in step 115 and relays the dedicated channel signal to the MSS 130 in step 125. The FRS 120 also receives an upstream dedicated control channel or traffic channel signal from the MSS 130 in step 127 and relays the dedicated channel signal to the BS 110 in step 117.

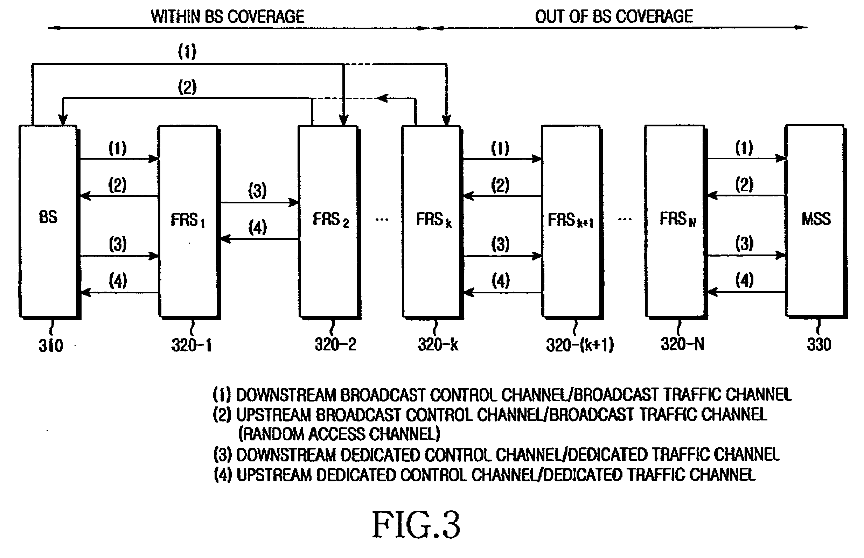

Cell coverage expansion using the a 2-hop relay in the multi-hop relay cellular communication system has been described above. A description is now made of system capacity increase using the 2-hop relay in the multi-hop relay cellular communication system with reference to FIG 2.

FIG 2 is a block diagram illustrating a signal flow for a system capacity increasing operation using the 2-hop relay in the multi-hop relay cellular communication system according to the present invention.

Referring to FIG 2, system capacity is increased by signal relaying between a BS 210 and an MSS 230 via a single MRS (or FRS) 220, i.e. a 2-hop relay. The MRS (or FRS) 220 and the MSS 230 are located within the cell coverage of the BS 210. Hence, the MSS 230 receives a downstream broadcast control channel or traffic channel signal from the BS 210 via a direct link in step 211 and transmits an upstream random access channel signal to the BS 210 via the direct link in step 213. While the MRS (or FRS) 220 can receive a downstream broadcast control channel or traffic channel signal from the BS 210 in step 215 and an upstream random access channel signal from the MSS 230 in step 217, it relays the received signals.
The MRS (or FRS) 220 relays dedicated control channel or traffic channel signals between the BS 210 and the MSS 230. Specifically, the MRS (FRS) 220 receives a downstream dedicated control channel or traffic channel signal from the BS 210 in step 219 and relays the dedicated channel signal to the MSS 230 in step 221. The MRS (FRS) 220 also receives an upstream dedicated control channel or traffic channel signal from the MSS 230 in step 223 and relays the dedicated channel signal to the BS 210 in step 225.

System capacity increase using the 2-hop relay in the multi-hop relay cellular communication system has been described above. A description is now made of cell coverage expansion by a multi-hop relay in the multi-hop relay cellular communication system with reference to FIG 3.

FIG 3 is a block diagram illustrating a signal flow for a cell coverage expanding operation by a multi-hop relay in the multi-hop relay cellular communication system according to the present invention.

Referring to FIG 3, the cell coverage of a BS 310 is expanded by signal relaying between the BS 310 and an MSS 330 through a plurality of (N) FRSs 320-1 to 320-N, FRS₁ to FRS_{N}, i.e., by an (N+1)-hop relay. k FRSs 320-1 to 320-k, FRS₁ to FRSₖ are within the cell coverage of the BS 310, while (N-k) FRSs 320-(k+1) to 320-N, FRS_{(K+1)} to FRS_{N} are out of the BS 310's cell coverage.

The k FRSs within the cell coverage transmit upstream broadcast control channel or traffic channel signals, for example, upstream random access channel signals to the BS 310 via direct links and receive downstream broadcast control channel or traffic channel signals from the BS 310 via the direct links. Downstream dedicated control channel or traffic channel signals are relayed through the k FRSs.

The remotest k^{th} FRS 320-k, FRSₖ in the cell coverage exchanges a downstream broadcast control channel or traffic channel signal, an upstream broadcast control channel or traffic channel signal like an upstream random access channel signal, a downstream dedicated control channel or traffic channel signal, and an upstream dedicated control channel or traffic channel signal with the (k+1)^{th} FRS 320-(k+1), (FRSₖ₊₁).
The (k+1)^{th} FRS 320-(k+1) (FRSₖ₊₁) to the N^{th} FRS 320-N, (FRS_{N}) out of the cell coverage exchange downstream broadcast control channel or traffic channel signals, upstream broadcast control channel or traffic channel signals like upstream random access channel signals, downstream dedicated control channel or traffic channel signals, and upstream dedicated control channel or traffic channel signals with their neighbor FRSs, via direct links to each other as shown in FIG 3. Consequently, they exchange these signals with the end MSS 330.

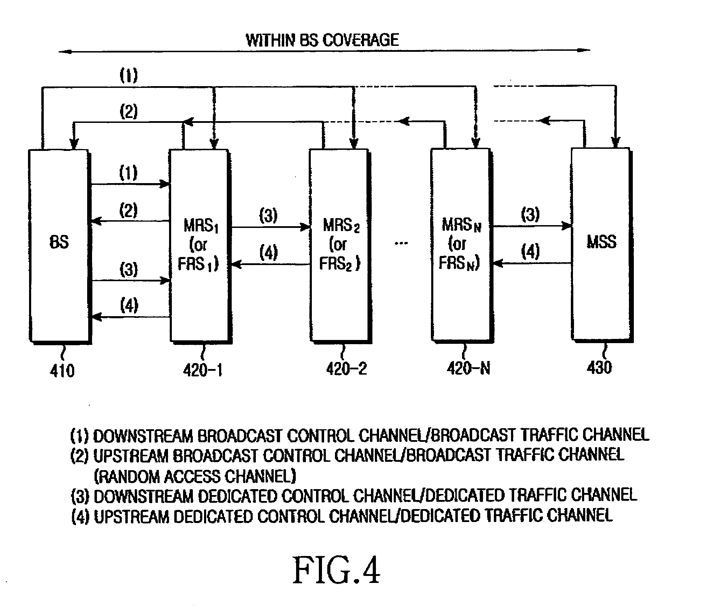

Cell coverage expansion by a multi-hop relay in the multi-hop relay cellular communication system has been described above. A description will now be made of system capacity increase by the multi-hop relay through use of FRSs or MRSs in the multi-hop relay cellular communication system with reference to FIG 4.

FIG 4 is a block diagram illustrating a signal flow for a system capacity increasing operation by the multi-hop relay through use of FRSs or MRSs in the multi-hop relay cellular communication system according to the present invention.

Referring to FIG 4, system capacity is increased by signal relaying between a BS 410 and an MSS 430 through a plurality of (N) MRSs (or FRSs) 420-1 to 420-N, NMS₁ to MRS_{N}, i.e., by using a (N+1)-hop relay. The N MRSs (or FRSs) 420-1 to 420-N and the MSS 430 are within the cell coverage of the BS 410. Therefore, the MRSs (or FRSs) 420-1 to 420-N and the MSS 430 exchange downstream broadcast control channel or traffic channel signals and upstream broadcast control channel or traffic channel signals like upstream random access channel signals with the BS 410 via direct links. The MRSs (or FRSs) 420-1 to 420-N relay only downstream and upstream dedicated control channel or traffic channel signals.

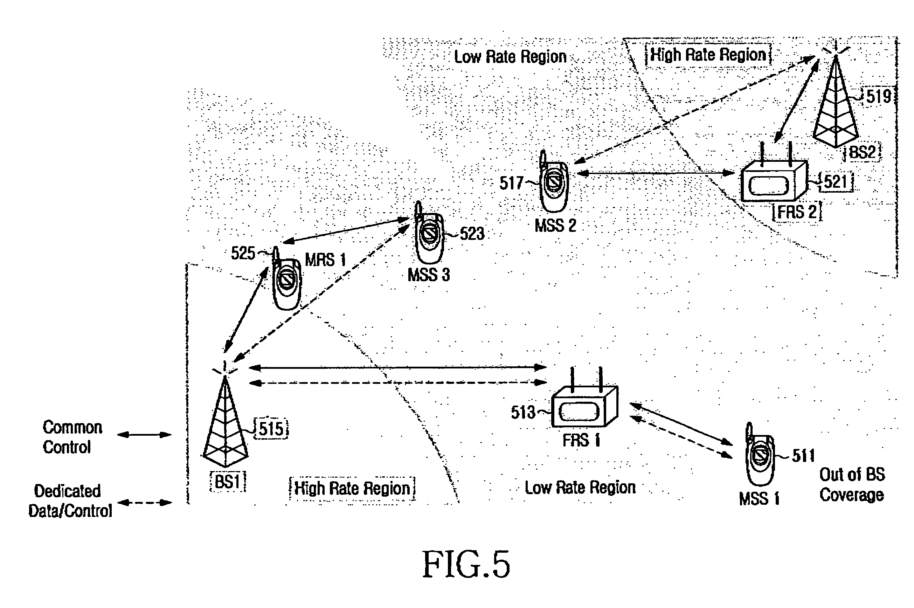

System capacity increase by the multi-hop relay through use of MRSs or FRSs in the multi-hop relay cellular communication system has been described above. A description will now be made of cell coverage expansion and system capacity increase by the 2-hop relay through use of FRSs and MRSs in the multi-hop relay cellular communication system with reference to FIG 5.

FIG 5 is a diagram illustrating a signal flow for an operation for increasing cell coverage and system capacity the 2-hop relay through use of FRSs and MRSs in the multi-hop relay cellular communication system according to the present invention.

Referring to FIG 5, cell coverage and system capacity are increased by signal relaying between a BS and an MSS through a single MRS or FRS, i.e., by a 2-hop relay. A first MSS 511 (MSS 1) communicates with a first BS 515 (BS 1) via a first FRS 513 (FRS 1). Since the MSS 1 is out of the cell coverage of BS 1, it acquires initial access (i.e., network entry) to the BS 1 via the FRS 1.

A second MSS 517 (MSS 2) is within the cell coverage of a second BS 519 (BS 2) but at a cell boundary. Since the data rate of a direct link between the MSS 2 and the BS 2 is very low, the second MSS 2 exchanges dedicated control channel or traffic channel signals with the BS 2 in a fast relay path via a second FRS 521 (FRS 2).

A third MSS 523 (MSS 3) is within the cell coverage of the BS 1 but at a cell boundary. Since the data rate of a direct link between the MSS 3 and the BS 1 is very low, the MSS 3 exchanges dedicated control channel or traffic channel signals with the BS 1 in a fast relay path via a third MRS 525 (MRS 3).

' As described above, the present invention differentiates the relay functions of an FRS and an MRS according to their mobility such that signal relaying of the FRS increases cell coverage and system capacity, and signal relaying of the MRS increases system capacity in a multi-hop relay cellular mobile communication system. Therefore, such a multi-hop relay cellular mobile communication system as required for a 4G mobile communication system can be implemented.

While the invention has been shown and described with reference to certain preferred embodiments thereof, it will be understood by those skilled in the art that various changes in form and details may be made therein without departing from the spirit and scope of the invention as defined by the appended claims.

## Claims

1. A signal relaying method in a communication system, comprising the steps of:
(1) controlling a first relay station or a second relay station to relay signals between a base station (BS) and a mobile subscriber station (MSS) if the MSS is within the cell coverage of the BS; and
(2) controlling the first relay station to relay signals between the BS and the MSS if the MSS is out of the cell coverage of the BS.

2. The signal relaying method of claim 1, wherein step (1) comprises the steps of:
controlling the BS and the MS to exchange a downlink common signal and an uplink common signal via a direct link between the BS and the MS; and
controlling the first relay station or the second relay station to relay a downlink dedicated signal from the BS to the MSS and to relay an uplink dedicated signal from the MSS to the BS.

3. The signal relaying method of claim 2, wherein the downlink common signal is one of a broadcast control channel signal and a broadcast traffic channel signal.

4. The signal relaying method of claim 2, wherein the uplink common signal is a random access channel signal.

5. The signal relaying method of claim 2, wherein the downlink dedicated signal is one of a dedicated control channel signal and a dedicated traffic channel signal.

6. The signal relaying method of claim 2, the uplink dedicated signal is one of a dedicated control channel signal and a dedicated traffic channel signal.

7. The signal relaying method of claim 1, wherein step (2) comprises the step of controlling the first relay station to relay a downlink common signal and a downlink dedicated signal from the BS to the MSS and to relay an uplink common signal and an uplink dedicated signal from the MSS to the BS.

8. The signal relaying method of claim 7, wherein the downlink common signal is one of a broadcast control channel signal and a broadcast traffic channel signal.

9. The signal relaying method of claim 7, wherein the uplink common signal is a random access channel signal.

10. The signal relaying method of claim 9, wherein the downlink dedicated signal is one of a dedicated control channel signal and a dedicated traffic channel signal.

11. The signal relaying method of claim 9, the uplink dedicated signal is one of a dedicated control channel signal and a dedicated traffic channel signal.

12. A signal relaying system in a communication system, comprising:
a mobile subscriber station (MSS);
a base station (BS);
a first relay station located between the MSS and the BS, for relaying a signal between the MSS and the BS; and
a second relay station located between the MSS and the BS, for relaying a signal between the MSS and the BS,
wherein if the MSS is within the cell coverage of the BS, the first relay station or second relay station relays signals between the BS and the MSS, and if the MSS is out of the cell coverage of the BS, the first relay station relays signals between the BS and the MSS.

13. The signal relaying system of claim 12, wherein the BS and the MS exchange a downlink common signal and an uplink common signal via a direct link between the BS and the MS, and the first relay station or the second relay station relays a downlink dedicated signal from the BS to the MSS and relays an uplink dedicated signal from the MSS to the BS.

14. The signal relaying system of claim 13, wherein the downlink common signal is one of a broadcast control channel signal and a broadcast traffic channel signal.

15. The signal relaying system of claim 13, wherein the uplink common signal is a random access channel signal.

16. The signal relaying system of claim 13, wherein the downlink dedicated signal is one of a dedicated control channel signal and a dedicated traffic channel signal.

17. The signal relaying system of claim 13, the uplink dedicated signal is one of a dedicated control channel signal and a dedicated traffic channel signal.

18. The signal relaying system of claim 12, wherein the first relay station relays a downlink common signal and a downlink dedicated signal from the BS to the MSS and relays an uplink common signal and an uplink dedicated signal from the MSS to the BS.

19. The signal relaying system of claim 18, wherein the downlink common signal is one of a broadcast control channel signal and a broadcast traffic channel signal.

20. The signal relaying system of claim 18, wherein the uplink common signal is a random access channel signal.

21. The signal relaying system of claim 18, wherein the downlink dedicated signal is one of a dedicated control channel signal and a dedicated traffic channel signal.

22. The signal relaying system of claim 18, wherein the uplink dedicated signal is one of a dedicated control channel signal and a dedicated traffic channel signal.
